(19) Europäisches Patentamt
European Patent Office
Office européen des brevets

(11) **EP 3 889 723 A1**

(12) **EUROPEAN PATENT APPLICATION**

(43) Date of publication:
**06.10.2021 Bulletin 2021/40**

(51) Int Cl.:
***G05D 1/02*** *(2020.01)*

(21) Application number: **20211281.9**

(22) Date of filing: **02.12.2020**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **03.04.2020 KR 20200040922** | (71) Applicant: **Pablo Air Co., Ltd.**<br>**Yeonsu-gu**<br>**Incheon 21988 (KR)**<br><br>(72) Inventor: **DONG, Min Shin**<br>**Incheon, 21912 (KR)**<br><br>(74) Representative: **Gulde & Partner**<br>**Patent- und Rechtsanwaltskanzlei mbB**<br>**Wallstraße 58/59**<br>**10179 Berlin (DE)** |

(54) **METHOD IN WHICH SMALL FIXED-WING UNMANNED AERIAL VEHICLE FOLLOWS PATH AND LGVF PATH-FOLLOWING CONTROLLER USING SAME**

(57)    Provided is an LGVF path-following controller including: an LGVF control unit that is provided with a heading angle command for a wing-fixed unmanned aerial vehicle and guidance commands from the outside, and is provided with a computed estimation disturbance speed from a nonlinear disturbance control unit; a heading angle computation control unit that computes a final heading angle of the wing-fixed unmanned aerial vehicle using a difference between the heading angle of the wing-fixed unmanned aerial vehicle, which is computed by the LGVF control unit, and a heading angle of the wing-fixed unmanned aerial vehicle in an ideal environment where a disturbance is not present; and a nonlinear disturbance control unit that computes the estimation disturbance speed using the final heading angle provided from the heading angle computation control unit and pieces of sensor data on the wing-fixed unmanned aerial vehicle, which are provided from a sensor.

EP 3 889 723 A1

**Description**

CROSS REFERENCE TO RELATED APPLICATION

The present application claims priority to Korean Patent Application No. 10-2020-0040922, filed in April, 3, 2020 the entire contents of which is incorporated herein for all purposes by this reference.

BACKGROUND OF THE INVENTION

Field of the Invention

The present invention relates to a method in which a small fixed-wing unmanned aerial vehicle follows a path and an LGVF path-following controller using the method and, more particularly, to a method in which a small fixed-wing unmanned aerial vehicle follows a path while accommodating the influence of a disturbance.

Description of the Related Art

Both the military sector and the private sector have paid attention to a small fixed-wing unmanned aerial vehicle for surveillance and reconnaissance and patrolling power-lines or aerial photography, respectively. Among many types of unmanned aerial vehicles, a small fixed-wing unmanned aerial vehicle (that weighs less than 10 Kg) is affordable, has a low initial cost advantage, and is suitable to carry a required payload and efficiently perform a difficult job. For this reason, this type of small fixed-wing unmanned aerial vehicle is now in wide use. However, the small fixed-wing unmanned aerial vehicle has a small size and a light weight and thus is vulnerable to an external disturbance, such as wind. The disturbance has an adverse influence on performance in flight or causes a serious problem in stability of a control system in operation.

Therefore, a solution to this problem has to be reflected in a design of a flight control system for the small fixed-wing unmanned aerial vehicle. Disturbances here include not only wind in an external environment, but also a modeling error due to uncertainty of a system parameter. The disturbance that acts on the small fixed-wing unmanned aerial vehicle has to be properly taken into consideration and has to be eliminated. Because the disturbance is difficult to directly measure using a sensor, the elimination of the disturbance is one of the major challenges in a design of a control system.

It is important that the small fixed-wing unmanned aerial vehicle autonomously follows a predefined path in order to perform a task, such as surveillance or reconnaissance. The most common task of the unmanned aerial vehicle is to follow a straight or circular orbital path. Guidance techniques include Carrot-Chasing, Nonlinear Guidance Law (NLGL), Linear Quadratic Regulator (LQR), Pure Pursuit with Line-of-sight (PLOS), Vector Field (VF), and so on. A general requirement for the guidance technique is that, when a disturbance is present such as wind, a path has to be precisely followed. Performances of these guidance techniques are analyzed in detail under various wind conditions. In the carrot-chasing guidance technique, a path is difficult to precisely follow when wind strength is great. In the NLGL, PLOS, and LQR guidance techniques, sensitivity to a gain value exists, and a high cross-track error occurs. In contrast, in the VF guidance technique, a low cross-track error occurs and the highest performance is achieved.

One way to eliminate an influence of a disturbance, such as wind, when an unmanned aerial vehicle follows a path is using ground-referenced measurements that result from considering the influence of the wind. In this method, the ground-referenced measurements, such as a ground speed and a course angle, are used instead of using airspeed and a heading angle. Integration of systems, such as an Inertial Navigation System and a Global Positioning System (GPS), makes it possible to provide the ground speed and the course. However, in the case of a small unmanned aerial vehicle equipped with a low-priced GPS system, the quality of sensor data provided from the GPS may not be satisfactory. In addition, additional measurements provided from the GPS may be much influenced by a gale. Therefore, instead of using the ground-referenced measurements that result from considering a disturbance, such as wind, a different approach for directly estimating and compensating for the disturbance is required in order to eliminate an influence of the wind. Research has been made on control techniques, such as an adaptive control and a sliding mode control, in order to compensate for a disturbance. In the adaptive control technique, a feedback control method is basically used, and control is performed on the basis of a tracking error between an output state and a desired command. When compared with a feedforward control technique, this method performs feedback control on the basis of the tracking error, and thus causes a response to be slow in attenuating a disturbance effect. Therefore, it is necessary to directly compensate for the disturbance through the use of the feedforward control technique that possibly causes a rapid response. The disturbance that acts on a system has to be measured in order to perform feedforward control.

However, the disturbance is difficult to directly measure using a sensor. For application of the concept of a disturbance, research has been made on a disturbance observer through which a disturbance is estimated in order to measure the disturbance, such as wind or systematic uncertainty, and on disturbance observer-based control that compensates for the estimated disturbance. The disturbance observer-based control (DOBC) technique has two advantages. First, the disturbance observer-based control technique, regarded as a patch on a designed controller, can be easily integrated into a previously-designed controller. Second, the disturbance observer-based control technique is a type of active anti-disturbance control (AADC), and can compensate for the disturbance faster than a passive anti-disturbance control (PADC). When compared with the PADC technique that attenuates only the disturbance according to a feedback rule, the disturbance observer-based control (DOBC) technique provides feedforward in order to directly attenuate a disturbance to the control system, thereby causing a dynamic response to be always fast when processing the disturbance. Due to this advantage, the disturbance observer-based control technique has been regarded as a popular method for estimating and compensating for a disturbance.

For wide use, the disturbance observer-based control technique finds application in an industry system, robotics, flight control, a space system, and the like. With the application of the disturbance observer-based control technique in a rotary-wing unmanned aerial vehicle, a disturbance observer is applied to a posture controller in order to compensate mainly for a disturbance to an inner loop of a helicopter. In addition, the disturbance observer is applied to a vertical-axis controller in order to eliminate an influence of the disturbance on an inner loop of a small fixed-wing unmanned aerial vehicle. In addition, the disturbance observer is applied to a vertical-axis controller of a wing-fixed unmanned aerial vehicle, as well as an LQR controller, thereby improving the performance thereof. Mr. Liu and others proposed a method for designing a path-following controller based on a disturbance observer in order to eliminate an influence of wind on the small fixed-wing unmanned aerial vehicle and thus improve path-following performance thereof to a higher degree. However, most of the proposed methods employ a disturbance observer to eliminate an influence of a disturbance on an inner loop. However, these methods require that the system model of an observer is known for application of the disturbance observer.

Examples of the related art include Korean Patent No. 1650136 tilted "SMART DRONE DEVICE CAPABLE OF RETURNING AUTOMATICALLY TO ORIGINAL POSITION AND OF AUTOMATICALLY FOLLOWING PATH WITH COLOR TRACKING" and Korean Patent No. 1766879 titled "AUXILIARY DEVICE FOR DRONE FLIGHT AND DRONE USING SAME"

SUMMARY OF THE INVENTION

An objective of the present invention is to provide a method in which a small fixed-wing unmanned aerial vehicle follows a path while accommodating an influence of a disturbance.

Another objective of the present invention is to provide a method in which a small fixed-wing unmanned aerial vehicle follows a path while compensating for an influence of a disturbance. According to an aspect of the present invention, there is provided an LGVF path-following controller including: an LGVF control unit that is provided with a heading angle command for a wing-fixed unmanned aerial vehicle and guidance commands, such as an airspeed and an altitude, from the outside, and is provided with a computed estimation disturbance speed from a nonlinear disturbance control unit; a heading angle computation control unit that computes a final heading angle of the wing-fixed unmanned aerial vehicle using a difference between the heading angle of the wing-fixed unmanned aerial vehicle, which is computed by the LGVF control unit, and a heading angle of the wing-fixed unmanned aerial vehicle in an ideal environment where a disturbance is not present; and a nonlinear disturbance control unit that computes the estimation disturbance speed using the final heading angle provided from the heading angle computation control unit and pieces of sensor data including a position, posture, and speed of the wing-fixed unmanned aerial vehicle, which are provided from a sensor.

In a method according to the present invention in which a small fixed-wing unmanned aerial vehicle follows a path, it is possible that LGVF-based path-following control is performed on the basis of a nonlinear disturbance observer for the small fixed-wing unmanned aerial vehicle that is influenced by a disturbance, such as wind. According to the present invention, there is provided a technique in which the small fixed-wing unmanned aerial vehicle can precisely follow a circular path in an environment where wind blows. As described under the legend "DETAILED DESCRIPTION OF THE INVENTION", the influence of the disturbance can be compensated for and thus the circular path can be precisely followed.

BRIEF DESCRIPTION OF THE DRAWINGS

FIG. 1 is a block diagram illustrating operation of an LGVF path-following controller based on a nonlinear disturbance observer (NDO) according to the present invention;
FIG. 2 is a diagram illustrating a geometric structure of a tangent vector field according to the present invention;
FIG. 3 is a diagram illustrating a structure of the LGVF path-following controller based on the nonlinear disturbance observer according to the present invention; and
FIG. 4 is a diagram illustrating a flight path of a wing-fixed unmanned aerial vehicle that is equipped with the LGVF path-following controller based on the nonlinear disturbance observer according to the present invention.

DETAILED DESCRIPTION OF THE INVENTION

The above-described aspects of the present invention and additional aspects thereof will be apparent from a preferable embodiment that will be described with reference to the accompanying drawings. Descriptions will be provided below in sufficient detail so that a person of ordinary skill in the art clearly can understand and implement the embodiment of the present invention.

According to the present invention, there is provided a path-following guidance technique based on a nonlinear disturbance observer (NDO) for a small fixed-wing unmanned aerial vehicle that moves under the influence of a disturbance, such as wind. There is provided a control method based on a nonlinear disturbance observer that compensates for an influence of a disturbance in order that a small fixed-wing unmanned aerial to vehicle employing a Lyapunov Guidance Vector Field (LGVF) guidance technique follows a path more precisely in a situation where a disturbance, such as wind, occurs. The LGVF guidance technique is more robust against a disturbance than many other guidance techniques, and is advantageously capable of tracking a target object moving on the ground using single or multiple unmanned aerial vehicles. The DOBC control technique is a general path-following guidance technique. Unlike an existing technique that is applied to an inner loop, the DOBC control technique is applied to an outer loop. The nonlinear disturbance observer applied to the outer loop computes a disturbance to a path. The computed disturbance is input into an LGVF path-following controller to compensate for the disturbance.

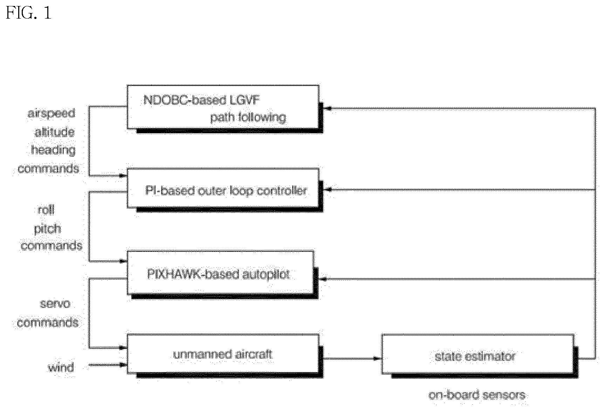

FIG. 1 illustrates operation of the LGVF path-following controller based on the nonlinear disturbance observer according to the present invention. In FIG. 1, the LGVF path-following controller based on the nonlinear disturbance observer (NDO) generates a heading angle command and guidance commands, such as an airspeed and an altitude, and sends the generated commands to the outer loop. The outer loop that is a type of proportional integral controller generates posture commands, such as a roll and a pitch, using PIXHAWK that is an automatic control device, and sends the generated posture commands. PIXHAWK receives the posture commands and stabilizes the inner loop.

With reference to FIG. 1, the LGVF path-following controller based on the nonlinear disturbance observer (NDO) generates the guidance commands, such as the airspeed and the altitude, and the heading angle command and provides the generated guidance commands, such as the airspeed and the altitude, and the generated heading angle command to an outer loop controller.

The outer loop controller generates the posture commands, such as the roll and the pitch, and provides the generated gesture commands to PIXHAWK (a flight controller). PIXHAWK generates a servo command and controls an unmanned aerial vehicle using the generated servo command. A servo compares a state of a certain device with a reference and provides feedback in the direction of stabilizing the device. Thus, the device is automatically controlled with the most suitable value or in a manner that satisfies an arbitrary target value. For this reason, the servo finds application in increasing the flight stability of the unmanned aerial vehicle.

In a case where a fixed-wing unmanned aerial vehicle employs a low-level automatic flight control system for functions of maintaining a direction, a speed, and an altitude, according to the present invention, a guidance command is input into the low-level automatic flight control system in order that the fixed-wing unmanned aerial vehicle follows a path. According to the separation principle, when it is assumed that a bandwidth of the inner loop is 5 to 10 times broader than a bandwidth of the outer loop, the inner loop and the outer loop may be individually designed into the low-level flight automatic control system. According to the present invention, the following simple two-dimensional motion equation for an unmanned aerial vehicle is applied.

Equation 1

$$\dot{x} = V_a \cos\psi + W_x$$

$$\dot{y} = V_a \sin\psi + W_y$$

$$\dot{\psi} = u$$

where $V_a$, $\psi$, and $\mu$ denotes input commands, such as a flight speed, heading angle, and turn rate, respectively, of the unmanned aerial vehicle, W denotes wind speed, $W_x$ denotes wind speed in the x-axis direction, $W_y$ denotes wind speed in the y-axis direction, x denotes a speed in the x-axis direction of the unmanned aerial vehicle, and y denotes a speed in the Y-direction of the unmanned aerial vehicle.

In order to facilitate application of the nonlinear disturbance observer, Equation 1 is rewritten as in the form of the following Equation 2. That is, Equation 1 is rewritten using functions f(x), gi(x), and $g_2(x)$ as in Equation 2.

Equation 2

$$\dot{x} = f(x) + g_1(x)u + g_2(x)d$$

The functions f(x), $g_1(x)$, and $g_2(x)$ are computed from Equation 1. When it is assumed that a disturbance changes over time (d≈0), the nonlinear disturbance observer (NDO) is derived as follows.

Equation 3

$$\dot{z} = -l(x)g_2(x)z - l(x)[g_2(x)p(x) + f(x) + g_1(x)u]$$
$$\hat{d} = z + p(x)$$

where $d=[\hat{W}_x\ \hat{W}_y]^l$ denotes an estimated speed of the disturbance and includes a modeling error, uncertainty, sensor noise, and the like, z denotes an amount of change in an inner state of an observer, and

$$\widehat{W}_x$$

is a disturbance in the x-axis direction, which is estimated by the nonlinear disturbance observer. At this point, disturbances that are estimated by the nonlinear disturbance observer include wind in the x-axis direction, systematic uncertainty, sensor noise, and the like.

z denotes an inner state of a nonlinear observer, and p(x) denotes a designed nonlinear function. 1(x) denotes a gain value of the nonlinear disturbance observer, and is expressed as follows.

Equation 4

$$l(x) = \frac{\partial p(x)}{\partial x}$$

$e=d-\hat{d}=[e_x e_y]^T$ expresses an estimation error of the NOD described above. When it is assumed that the disturbance has a fixed trend by comparison with an observer dynamic and changes slowly, Equation 2, Equation 3, and Equation 4 are combined, and thus the following estimation error dynamics can be derived. d denotes a disturbance speed reflecting wind speed.

Equation 5

$$\dot{e} = \dot{d} - \dot{\hat{d}} = -\dot{z} - \frac{\partial p(x)}{\partial x}\dot{x} = -l(x)g_2(x)e$$

Therefore, a problem of designing the disturbance observer leads to a problem of selecting a suitable gain value for achieving exponential stabilization regardless of a state x. According to the present invention, a $g_2(x)$ function is a constant matrix, and thus an observer gain may be set as follows.

Equation 6

$$l(x) = L = \begin{bmatrix} l_x & 0 \\ 0 & l_y \end{bmatrix}$$

where $l_x$, $l_y$ denotes a positive gain value that is adjustable and determines a convergence ratio for an estimation error. Therefore, a nonlinear function p(x) can be obtained by integrating 1(x) with respect to a state x using Equation 4.

An LGVF uses an input speed that appears in the following Equation 7.

Equation 7

$$\begin{bmatrix} \dot{x}_d \\ \dot{y}_d \end{bmatrix} = \frac{-v_d}{k_l r(r^2 + r_d^2)} \begin{bmatrix} \delta x(r^2 - r_d^2) + \delta y(2rr_d) \\ \delta y(r^2 - r_d^2) - \delta x(2rr_d) \end{bmatrix}$$

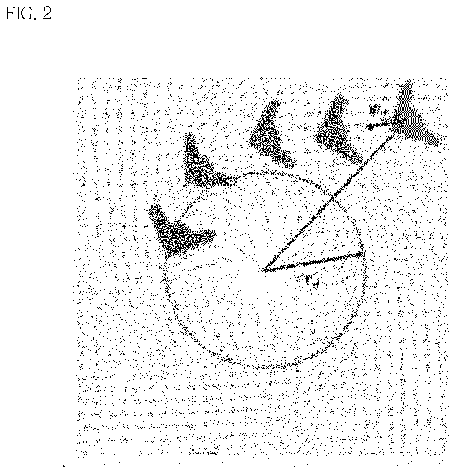

where $v_d$ and $r_d$ denote an input speed and input radius of the unmanned aerial vehicle. $r = \sqrt{\delta x^2 + \delta y^2}$ expresses a distance between the unmanned aerial vehicle and the origin, as illustrated in FIG. 2. $k_l$ is a gain value that determines a speed at which the unmanned aerial vehicle converges on a circular path. A vehicle angle command to be input for the unmanned aerial vehicle is determined as follows. $\delta$ denotes a displacement between the origin and a position of the unmanned aerial vehicle, and

$$\dot{x}_d$$

denotes an input speed in the x-direction.

Equation 8

$$\psi_d = tan^{-1}\left(\frac{\dot{y}_d}{\dot{x}_d}\right)$$

The heading angle command is obtained from a two-dimensional speed that is given by Equation 7. A guidance command ($u_w$) for the turn rate of the unmanned aerial vehicle is expressed, as the sum of proportional feedback and feedforward terms, as follows.

Equation 9

$$u_w = -k_w(\psi - \psi_d) + \dot{\psi}_d$$

where $k_w$ denotes a gain value for the turn rate and is generally set by tuning.

Equation 10

$$\psi_d = 4v_d \frac{r_d r^2}{(r^2 + r_d{}^2)^2}$$

where $\Psi_d$ denotes an input turn-rate command obtainable by differentiating Equation 8.

A disturbance, such as wind, is estimated by the nonlinear disturbance observer (NDO) as in Equation 3. To compensate for this, a new input speed for the LGVF in Equation 7 can be computed as follows.

Equation 11

$$\begin{bmatrix} \dot{x}_{dn} \\ \dot{y}_{dn} \end{bmatrix} = \begin{bmatrix} \widehat{W}_x + \alpha_s \dot{x}_d \\ \widehat{W}_y + \alpha_s \dot{y}_d \end{bmatrix}$$

where $\widehat{W}_x, \widehat{W}_y$ denotes a disturbance estimated using Equation 3, and $\alpha_s$ denotes a scale factor. A final input heading angle command for compensating for the disturbance is as follows.

$$\dot{x}_{dn}$$

denotes a new input speed in the x-direction, which results from the disturbance computed from the disturbance observer being configured for the LGVF.

$$\dot{y}_{dn}$$

denotes a new input speed in the y-axis direction, which results from the disturbance computed from the disturbance observer being considered for the LGVF.

Equation 12

$$\psi_d = \tan^{-1}\left(\frac{\dot{y}_{dn}}{\dot{x}_{dn}}\right)$$

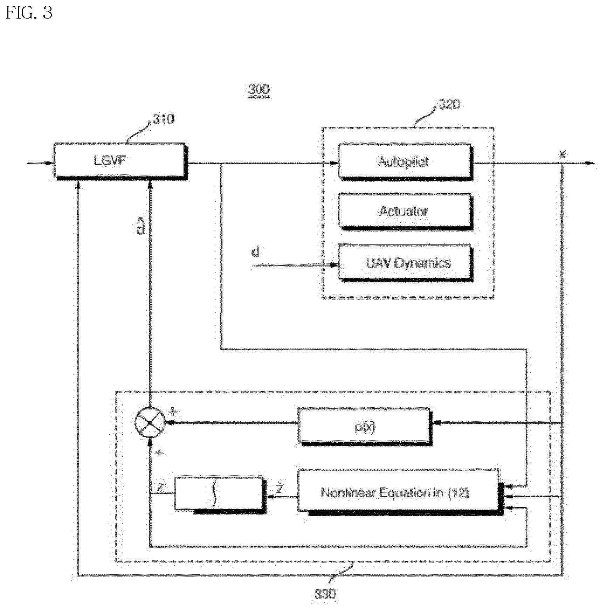

FIG. 3 illustrates a structure of the LGVF path-following controller based on the nonlinear disturbance observer according to the present invention. The structure of the LGVF path-following controller based on the nonlinear disturbance observer according to an embodiment of the present invention will be described in detail below with reference to FIG. 3.

With reference to FIG. 3, an LGVF path-following controller 300 is configured with an inner loop and an outer loop. The outer loop includes an LGVF control unit 310 and a nonlinear disturbance control unit 330. The loop includes a heading angle computation control unit 320.

Information on a disturbance, such as wind or systematic uncertainty, which is estimated by the nonlinear disturbance observer (NDO), is input into the LGVF path-following controller to compensate for an influence of the disturbance. When a heading angle input command and guidance commands, such as a speed and an altitude, are determined by the LGVF control unit 310, the posture command is generated in the heading angle computation control unit 320 that is the outer loop which includes an anti-windup augmented system and a proportional feedback controller.

A configuration of the LGVF path-following controller according to the present invention will be described in detail below with reference to FIG. 3.

The LGVF control unit 310 receives the heading angle command and the guidance commands, such as the airspeed and the altitude, from the outside. In addition, the LGVF control unit 310 receives pieces of sensor data, such as a position, posture, and speed of a wing-fixed unmanned aerial vehicle. In addition, the LGVF control unit 310 is provided with an estimation disturbance speed computed by the nonlinear disturbance control unit 330.

The LGVF control unit 310 computes the heading angle of the wing-fixed unmanned aerial vehicle using the provided pieces of information. The computed heading angle of the unmanned aerial vehicle is transferred to the heading angle computation control unit 320 that is an inner loop and the nonlinear disturbance control unit 330 that is an outer loop.

The heading angle computation control unit 320 computes the heading angle of the wing-fixed unmanned aerial vehicle that results from considering a disturbance using the heading angle of the wing-fixed unmanned aerial vehicle provided from the LGVF control unit 310 and the motion equation (Equation 1) for the wing-fixed unmanned aerial vehicle in an ideal environment where the disturbance is not present.

The heading angle of the wing-fixed unmanned aerial vehicle, which results from considering the disturbance computed by the heading angle computation control unit 320 and the pieces of sensor data, such as the position, posture, and speed of the wing-fixed unmanned aerial vehicle, which are measured by the sensor, are provided to the nonlinear disturbance control unit 330.

The nonlinear disturbance control unit 330 computes a disturbance that is estimated using the heading angle of the wing-fixed unmanned aerial vehicle that results from considering the disturbance, which is provided from the heading angle computation control unit 320, and the pieces of sensor data, such as the position, posture, and speed of the wing-fixed unmanned aerial vehicle, which are measured by the sensor. The estimated disturbance is computed using Equation 12.

As described above, the LGVF path-following controller based on the nonlinear disturbance observer according to the present invention includes the outer loop that includes the nonlinear disturbance control unit that estimates a disturbance, such as wind, and the LGVF control unit for following a path.

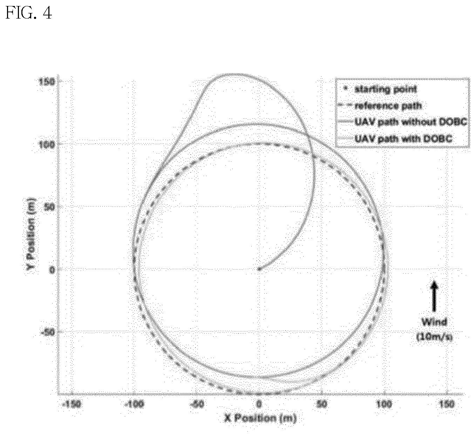

FIG. 4 illustrates a flight path of the wing-fixed unmanned aerial vehicle that is equipped with the LGVF path-following controller based on the nonlinear disturbance observer according to the present invention. From FIG. 4, it can be understood that whereas the wing-fixed unmanned aerial vehicle that was equipped with the LGVF path-following controller based on the nonlinear disturbance observer flied along a path that was set, the wing-fixed unmanned aerial vehicle that was not equipped with the LGVF path-following controller based on the nonlinear disturbance observer did not fly along the path that was set.

The embodiment of the present invention is described only in an exemplary manner referring to the drawings. It will be apparent to a person of ordinary skill in the art to which the present invention pertains that various other modifications and equivalents are possible from this description.

**Claims**

1. An LGVF path-following controller comprising:

   an LGVF control unit that is provided with a heading angle command for a wing-fixed unmanned aerial vehicle and guidance commands, such as an airspeed and an altitude, from the outside, and is provided with a computed estimation disturbance speed from a nonlinear disturbance control unit;
   a heading angle computation control unit that computes a final heading angle of the wing-fixed unmanned aerial vehicle using a difference between the heading angle of the wing-fixed unmanned aerial vehicle, which is computed by the LGVF control unit, and a heading angle of the wing-fixed unmanned aerial vehicle in an ideal environment where a disturbance is not present; and
   a nonlinear disturbance control unit that computes the estimation disturbance speed using the final heading angle provided from the heading angle computation control unit and pieces of sensor data including a position, posture, and speed of the wing-fixed unmanned aerial vehicle, which are provided from a sensor.

2. The LGVF path-following controller according to claim 1, wherein the heading angle of the wing-fixed unmanned aerial vehicle in the ideal environment where the disturbance is not present is computed using the following equation:

Equation

$$\dot{x} = V_a\, cos\psi + W_x$$

$$\dot{y} = V_a\, sin\psi + W_y$$

$$\dot{\psi} = u$$

where $V_a$ denotes a flight speed of an unmanned aerial vehicle, $\psi$ denotes a heading angle of the unmanned aerial vehicle, u denotes an input command that is a turn rate of the unmanned aerial vehicle, W denotes wind speed, $W_x$ denotes wind speed in the x-axis direction, $W_y$ denotes wind speed in the y-axis direction, x denotes a speed in the x-axis direction of the unmanned aerial vehicle, and $\dot{y}$ denotes a speed in the y-axis direction of the unmanned aerial vehicle.

3. The LGVF path-following controller according to claim 1, wherein The LGVF control unit is provided with the pieces of sensor data, including the position, posture, and speed of the wing-fixed unmanned aerial vehicle, from the sensor.

4. The LGVF path-following controller according to claim 3, wherein the heading angle computation control unit computes the final heading angle using the following equation:

Equation

$$\psi_d = tan^{-1}\left(\frac{\dot{y}_{dn}}{\dot{x}_{dn}}\right)$$

where $\Psi_d$ denotes the final heading angle, $\dot{x}_{dn}$ denotes a new input speed in the x-axis direction, which results from a disturbance computed from a disturbance observer being considered for an LGVF, and $\dot{y}_{dn}$ denotes a new input speed in the y-axis direction, which results from the disturbance computed from the disturbance observer being considered for the LGVF.

5. The LGVF path-following controller according to claim 1, wherein the heading angle computation control unit is provided with a disturbance speed reflecting wind speed.

FIG. 1

FIG. 2

FIG. 3

FIG. 4

Europäisches
Patentamt

European
Patent Office

Office européen
des brevets

# EUROPEAN SEARCH REPORT

Application Number

EP 20 21 1281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ESCAMILLA NUNEZ H ET AL: "Robust path following using a small fixed-wing airplane for aerial research", 2015 INTERNATIONAL CONFERENCE ON UNMANNED AIRCRAFT SYSTEMS (ICUAS), IEEE, 9 June 2015 (2015-06-09), pages 1270-1278, XP033171590, DOI: 10.1109/ICUAS.2015.7152420 [retrieved on 2015-07-07] | 1-3,5 | INV. G05D1/02 |
| A | III and IV; * abstract * | 4 | |
| X | LUNGU MIHAI ED - PIEPER JEFF: "Auto-landing of fixed wing unmanned aerial vehicles using the backstepping control", ISA TRANSACTIONS, INSTRUMENT SOCIETY OF AMERICA. PITTSBURGH, US, vol. 95, 29 May 2019 (2019-05-29), pages 194-210, XP085940404, ISSN: 0019-0578, DOI: 10.1016/J.ISATRA.2019.05.019 [retrieved on 2019-05-29] * 5.3; figure 3 * | 1 | |

TECHNICAL FIELDS
SEARCHED (IPC)

G05D

The present search report has been drawn up for all claims

| Place of search | Date of completion of the search | Examiner |
|---|---|---|
| Munich | 27 May 2021 | Alesandrini, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200040922
- KR 1650136
- KR 1766879